# EUROPEAN PATENT APPLICATION

(11) **EP 4 668 230 A1**
(43) Date of publication of application: **24.12.2025**
(21) Application number: 25184140.9
(22) Date of filing: 20.06.2025
(51) Int. Cl.: G06V 10/82

(54) **TRAINING**

(30) Priority: 21.06.2024 GB 202408943; 21.06.2024 GB 202408944
(71) Applicant: Rolls-Royce plc, London N1 9FX (GB); Rolls-Royce Deutschland Ltd & Co KG, 15827 Blankenfelde-Mahlow (DE)
(72) Inventor: Voutchkov, Ivan, Derby, DE24 8BJ (GB); Keane, Andrew, Derby, DE24 8BJ (GB); Nasti, Adele, 15827 Blankenfelde-Mahlow (DE)
(74) Representative: Rolls-Royce plc

(57) **Abstract**

A method of training a conditional Generative Adversarial Network (cGAN) is disclosed. The cGAN (102) has a generator (305) and a discriminator (306). The method comprises obtaining a collection of images of components (301) having a plurality of input parameter values (302) defining component design properties and a plurality of output parameter values (302) defining component performance attributes. For each image, it is determined whether the image represents a feasible design or an infeasible design. The images are then categorised into categories representing feasible designs into a plurality of feasible categories using a Pareto front ranking process, in which each one of the component performance attributes is defines a corresponding objective function, and the images representing infeasible designs are categorised into an infeasible category. The cGAN is then using the images and their categorisation.

## Description

### CROSS REFERENCE TO RELATED APPLICATIONS

This application claims the benefit of priority from United Kingdom Patent Application Nos 2408943.5 and 2408944.3, both filed June 21, 2024, each of which are incorporated herein by reference in their entirety.

### FIELD

This disclosure relates to the training of conditional Generative Adversarial Networks.

### BACKGROUND

Conditional Generative Adversarial Networks (cGANs) are a popular deep learning architecture for image classification and generation. Their accuracy can be extremely high when they have access to large quantities of labelled training data. However, the learning process can be hindered in applications where labelled training data is sparse. In these circumstances, the input data - in the form of images - may be augmented to improve the training process.

### SUMMARY

In an aspect, there is provided a method training a conditional Generative Adversarial Network (cGAN), the method comprising:
obtaining a collection of images of components having a plurality of input parameter values defining component design properties and a plurality of output parameter values defining component performance attributes;
for each image, determining whether the image represents a feasible design or an infeasible design,
categorising the images representing feasible designs into a plurality of feasible categories using a Pareto front ranking process, in which each one of the component performance attributes is defines a corresponding objective function;
categorising the images representing infeasible designs into an infeasible category;
training the cGAN using the images and their categorisation.

In an embodiment, the Pareto front ranking process comprises iteratively determining which images are non-dominated for at least one of the objective functions.

In an embodiment, the feasible categories are class intervals of the range of Pareto front ranks evaluated for the images.

In an embodiment, the feasible categories contain an equal number of images.

In an embodiment, each feasible category has an associated set of rules that determine whether an image is categorised to it, and wherein, for at least one of the feasible categories, the associated set of rules includes images having a Pareto front rank in a particular range.

In an embodiment, the associated set of rules of one or more feasible categories comprises criteria relating to one or more of:
input parameter values;
output parameter values.

In an embodiment, the Pareto front rank of an image is only encoded in terms of the category of the image and is not present in the input parameter values or the output parameter values.

In an embodiment, one or more of a plurality of input parameter values are embedded in the images as graphical encodings.

In an embodiment, one or more of a plurality of output parameter values are embedded in the images as graphical encodings.

In an embodiment, the method further comprises, for each one of the collection of images of components, embedding one or more calibration graphics into the image to calibrate the plurality of graphical encodings against.

In an embodiment, a position of one or more calibration graphics is varied between each image.

In an embodiment, the graphical encodings are one or more of:
bars,
glyphs.

In an embodiment, images in the collection of images of components are one of:
photographs;
optical three-dimensional scans;
X-ray images;
computationally-generated images.

In another aspect, there is provided instructions executable by a computer that, when executed by the computer, cause the computer to perform the aforesaid method.

In an embodiment, the instructions are encoded on a computer-readable medium.

### BRIEF DESCRIPTION OF THE DRAWINGS

Embodiments will now be described by way of example only with reference to the accompanying drawings, in which:
Figure 1 shows a training framework for a cGAN;
Figure 2 shows the cGAN system of Figure 1 in more detail;
Figure 3 shows a mapping of data and functional modules in the memory of the cGAN system of Figure 2;
Figure 4 shows the generator network of Figure 3 in more detail;
Figure 5 shows the discriminator network of Figure 3 in more detail;
Figure 6 shows the procedure for training the cGAN system of Figure 1;
Figure 7 shows the procedure for embedding graphical encodings in images of Figure 6;
Figure 8 shows dominated and non-dominated designs in respect of two objective functions;
Figures 9A, 9B, 9C and 9D show locations of input and output data associated with an example;
Figure 10 shows how the image encoder of Figure 3 embeds graphical encodings in images;
Figure 11 shows results of Example 1;
Figure 12 shows a distribution of training data following application of rules to assign images to categories according to Example 2; and
Figure 13 shows results of Example 2.

### DETAILED DESCRIPTION

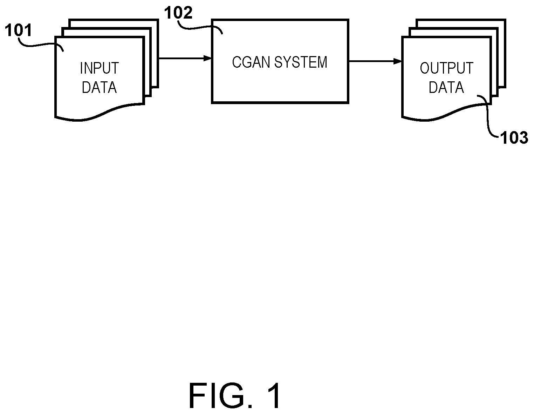

A high-level depiction of a training framework for a cGAN is shown in Figure 1. Input data 101 is provided to a cGAN system 102 which is trained using the input data 101. The cGAN system 102 may then be used to synthesize output data 103.

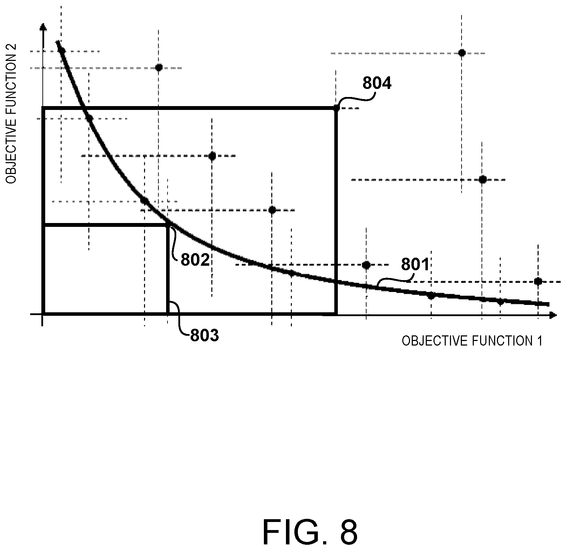

In the present embodiment, the input data 101 is a collection of images of components, each of which as one or more associated physical parameter values relating to the component. In an example that will be expanded upon with reference to Figure 8A onwards, the components could be a seal in a gas turbine engine and the physical parameter could be the static thickness of the seal. Additional physical parameters could be the rotor thickness of the seal, or the arm thickness of the seal, etc. In other envisaged examples, the component could be an aerofoil, and the physical parameter could be the chord length. Additional physical parameters could be the camber, or the dihedral, or the span, etc. Such physical parameters may be said to be indicative of "input" physical parameters to the design of the component and relate to its properties. Similarly, the physical parameters may be indicative of "output" physical parameters that relate to its performance, and are a consequence of the input physical parameters. For example, the gas turbine seal may have an output physical parameter such as its mass which is a consequence of its volume and material density. Similarly an aerofoil may have an output physical parameter such as lift or drag, which are a consequence of its geometric definition.

It will be appreciated that the component could be any other component or system susceptible to being depicted in an image, and having a physical parameter associated therewith. The images themselves may be photographs, optical three-dimensional scans, X-ray images, computationally-generated images, or any other type of image depicting a component.

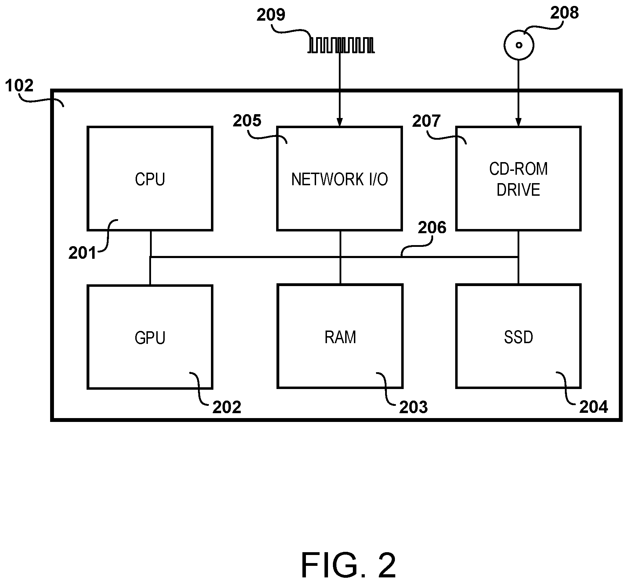

The cGAN system 102 is shown in more detail in Figure 2. The cGAN system 102 comprises a processor which in the present embodiment is a central processing unit (CPU) 201. In this instance, the CPU 201 is a single Intel (RTM) Core i9-10980XE processor, having 18 on-die processing cores operating at 3.00 gigahertz. It is of course possible that other processor configurations could be provided, and indeed several such processors could be present to provide a high degree of parallelism in the execution of instructions.

In this embodiment the CPU 201 is accompanied by a graphics processing unit (GPU) 202. In this specific case, the GPU 202 is a discrete nVidia (RTM) A4000 GPU operating at 735 MHz and having 16 gigabytes of on-board GDDR6 graphics memory. As will be appreciated by those skilled in the art, the extreme degree of parallelism exhibited by graphics processing units is well-suited to machine learning tasks, including both training and inference. Of course, other GPU configurations may be provided, for example multiple discrete GPUs could be installed in the cGAN system 102. Furthermore, the GPU 202 could be omitted and all processing performed on the CPU 201.

Over and above registers and cache in the CPU 201 and the graphics memory in the GPU 202, system memory is provided for by random access memory (RAM) 203, which in this example is double data rate (DDR) SDRAM totaling 128 gigabytes in capacity. Forming part of the overall memory system, RAM 203 allows storage of frequently used instructions and data structures by the cGAN system 102. A portion of RAM 203 is reserved as shared memory, which allows high speed inter-process communication.

Permanent storage is provided by a storage device such a solid-state disk (SSD) 204, which in this instance has a capacity of one terabyte. SSD 204 stores operating system, application data and may also provide virtual memory for the cGAN system 102. In alternative embodiments, a hard disk drive could be provided, or several storage devices provided and configured as a RAID array to improve data access times and/or redundancy.

Together, the registers and cache in CPU 201, the memory in the GPU 202, the RAM 203 and the SSD 204 all provide memory for this embodiment of the cGAN system 102 and it will be appreciated that at any one moment data could be stored in any of these locations.

A network interface 205 allows the cGAN system 102 to connect to a packet-based network such as the Internet.

The CPU 201, GPU 202, RAM 203, solid-state disk 204, and network interface 205 are all connected by a system bus 206 to facilitate communication and transfer of data.

An optical drive, such as a CD-ROM drive 207 is also connected to the bus 206, and may receive a non-transitory computer readable medium such as an optical disk, for example CD-ROM 208. The CD-ROM 208 comprises computer-readable instructions to enable the data augmentation process to be executed. These are, in use, installed on solid-state disk 204, loaded into RAM 203 and then executed by CPU 201 or dispatched to the GPU 202. Alternatively, these instructions may be downloaded from a network via the network interface 205 as packet data 209.

It will be appreciated that the above system is merely an example of a configuration of system that can fulfil the role of the cGAN system 102. Any other system having a processing device and memory could be used. Thus, in an alternative embodiment it is envisaged that an application-specific integrated circuit (ASIC) or field-programmable gate array (FPGA) could be configured with the same instructions so as to perform substantially the same operations as the cGAN system 102.

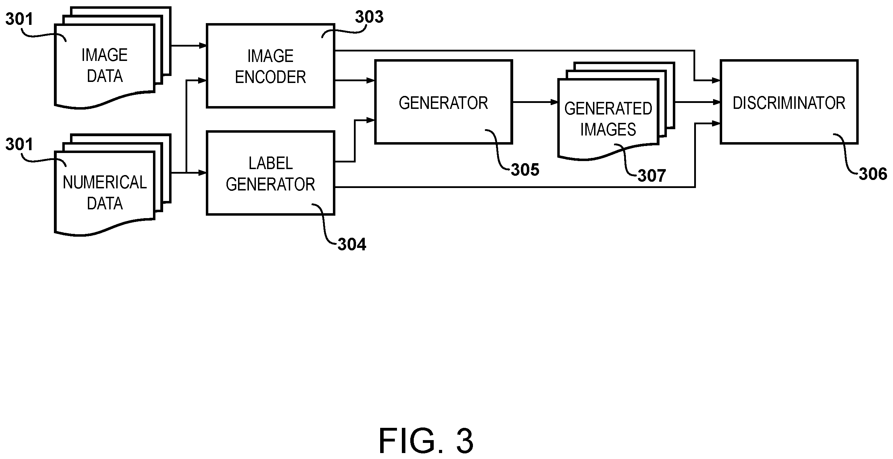

A mapping of data and functional modules in the memory of the cGAN system 102 is shown in Figure 3. The structure of the cGAN system is substantially similar to that set out in United States Patent Application No 17/967,620 which is currently assigned to the present Applicant. Hence, image data 301 and numerical data 302 are initially received at an image encoder 303. In this context, the input data 301 are the collection of images of components described previously, and the numerical data 302 are the one or more physical parameter values associated with each image. The image encoder 303 is configured to embed a plurality of graphical encodings into each image that encodes the one or more associated physical parameter values. The numerical data 302 are also provided to a label generator 304 which generates training labels for the corresponding images.

Images from the image encoder 303 and labels from the label generator are provided to a generator network 305 and to a discriminator network 306. The generator network 305 produces generated images 307 which are also provided to the discriminator network 306. The generator network 305 is configured to, given a label and random noise as an input, produce generated images 307 that mimic the image data 301. The discriminator network 306 is configured to classify input images as either real or fake. Training proceeds by training the generator network 305 to produce images that convince the discriminator network 306 that its generated images 307 are real. The discriminator network 306 is simultaneously trained to distinguish between real and synthetic generated images 307.

In the present embodiment, example parameters for the cGAN system 102 are as set out in Table 1:

**Table 1**

| **Parameter** | **Value** |
|---|---|
| Image resolution | 224×256 |
| Batch size | 50 |
| Number of filters | 110 |
| Number of categories | 6 |
| Number of latent variables | 20 |
| Latent variables distribution | random normal [-4.3, 4.3] |
| Generator learning rate | 0.0002 |
| Discriminator learning rate | 0.0001 |

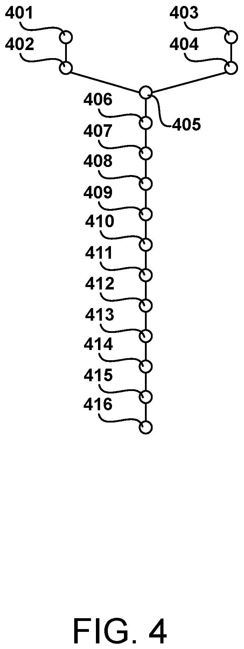

An embodiment of the generator network 305 is shown in Figure 4. The network layers are set out in Table 2, with properties configured to match the parameters of the cGAN system 102:

**Table 2**

| **Layer** | **Name** | **Description** |
|---|---|---|
| 401 | noise | 20 features (latent variables) |
| 402 | proj | Project and reshape layer with output size 24 28 1024 |
| 403 | labels | 1 feature |
| 404 | emb | Reshape layer with output size 24 28 |
| 405 | cat | Concatenation of 2 inputs along dimension 3 |
| 406 | tconv1 | 440 5×5×1025 transposed convolutions with stride [1 1] and cropping [0 0 0 0] |
| 407 | bn1 | Batch normalization with 440 channels |
| 408 | leakyRelu1 | Leaky ReLU with scale 0.2 |
| 409 | tconv2 | 220 5×5×440 transposed convolutions with stride [2 2] and cropping 'same' |
| 410 | bn2 | Batch normalization with 220 channels |
| 411 | leakyRelu2 | Leaky ReLU with scale 0.2 |
| 412 | tconv3 | 110 5×5×220 transposed convolutions with stride [2 2] and cropping 'same' |
| 413 | bn3 | Batch normalization with 110 channels |
| 414 | leakyRelu3 | Leaky ReLU with scale 0.2 |
| 415 | tconv4 | 3 5×5×110 transposed convolutions with stride [2 2] and cropping 'same' |
| 416 | tanh | Hyperbolic tangent |

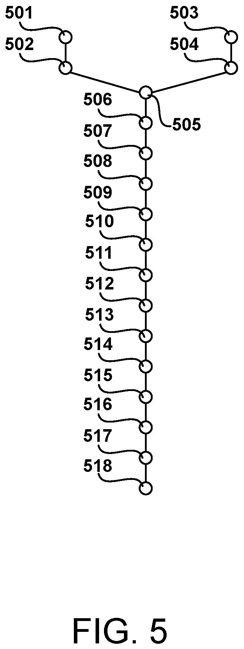

A specific embodiment of the discriminator network 306 is shown in Figure 5. The network layers are set out in Table 3 with properties configured to match the parameters of the cGAN system 102:

**Table 3**

| **Layer** | **Name** | **Description** |
|---|---|---|
| 501 | images | 224×256×3 images |
| 502 | dropout | 75% dropout |
| 503 | labels | 1 feature |
| 504 | emb | Reshape layer with output size 224 256 |
| 505 | cat | Concatenation of 2 inputs along dimension 3 |
| 506 | conv1 | 110 5×5×4 convolutions with stride [22] and padding 'same' |
| 507 | bn1 | Batch normalization with 110 channels |
| 508 | leakyRelu1 | Leaky ReLU with scale 0.2 |
| 509 | conv2 | 220 5×5×110 convolutions with stride [2 2] and padding 'same' |
| 510 | bn2 | Batch normalization with 220 channels |
| 511 | leakyRelu2 | Leaky ReLU with scale 0.2 |
| 512 | conv3 | 440 5×5×220 convolutions with stride [2 2] and padding 'same' |
| 513 | bn3 | Batch normalization with 440 channels |
| 514 | leakyRelu3 | Leaky ReLU with scale 0.2 |
| 515 | conv4 | 880 5×5×440 convolutions with stride [2 2] and padding 'same' |
| 516 | bn4 | Batch normalization with 880 channels |
| 517 | leakyRelu4 | Leaky ReLU with scale 0.2 |
| 518 | conv5 | 1 14×16×880 convolutions with stride [1 1] and padding [0 0 0 0] |

It will be appreciated by those skilled in the art that the generator network 305 and the discriminator network 306 may be adapted to conform to the parameter settings for the cGAN system 102, for example a different image size would impact the output size of the reshape layer 505.

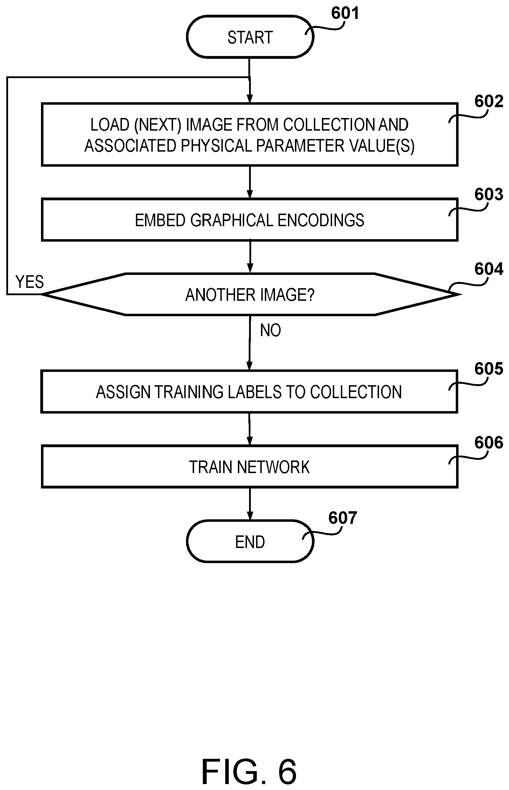

A procedure for training the cGAN system 102 is shown in Figure 6.

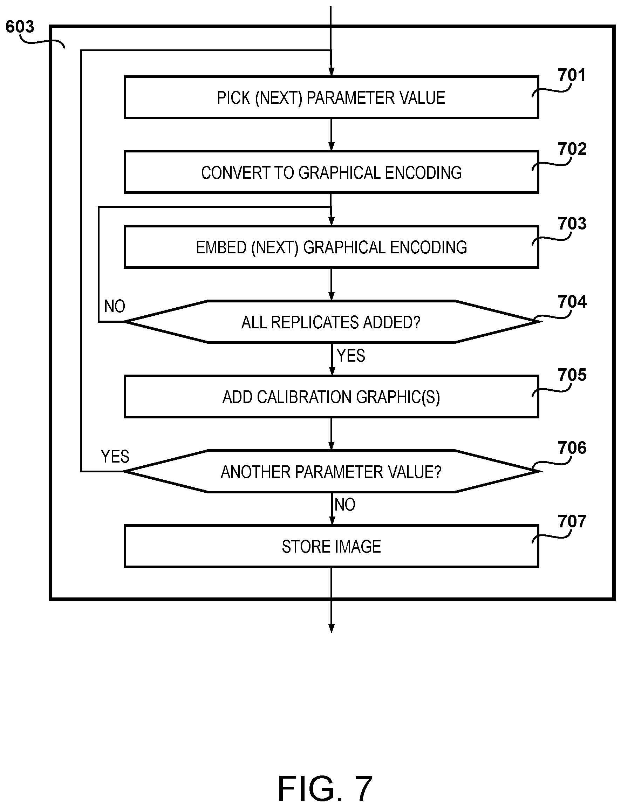

The procedure is initiated at 601, and at step 602 an image is loaded from the image data 301, along with the numerical data 302 for the loaded image. In other words, an image is loaded from a collection of images of components, along with one or more physical parameter values relating to the component depicted in that image. At step 603, a graphical encoding is embedded into the image by the image encoder 303. This process will be described further with reference to Figure 7. At step 604, a question is asked as to whether there are any further input images in the image data 301. If so, control returns to step 602 and the next image is loaded. If not, then in the present embodiment, control proceeds to step 605 where the collection of input images comprising the image data 301, now with embedded graphical encodings, are assigned their training labels by the label generator 304.

The model in the cGAN system 102 is then trained at step 607. In the present embodiment, an Adam optimiser is used in training. As described previously, a plurality of graphical encodings is embedded in the image data 301 by the image encoder 303. Hence, the generator network 305 generates generated images 307 with such graphical encodings. In the present embodiment, they are duplicated, hence there are pairs of physical parameter values embedded in each image. An error metric, representing the absolute error between two pairwise values, may therefore be computed during each iteration of the training process. In an embodiment, this error is incorporated into the loss function of both the generator network 305 and the discriminator network 306 and is configured to operate as a penalty function. In this way, the cGAN system 102 is trained to discriminate and generate images with a low pairwise error. In the present embodiment, a Wasserstein metric is incorporated in the loss function to stabilise training.

In the present embodiment, the pairwise error is monitored in real time and the training process may be halted once it converges. At this point, learning rates can be adjusted and training can continue until a new convergence point is reached. The error metric may also aid in selecting images with low pairwise error during network exploitation.

Should a greater number of replicas of each graphical encoding be embedded by the image encoder 303, the error metric could then be defined as the difference between the largest and smallest value.

The loss functions for the generator network 305 and discriminator network 306 are set out below in pseudocode:

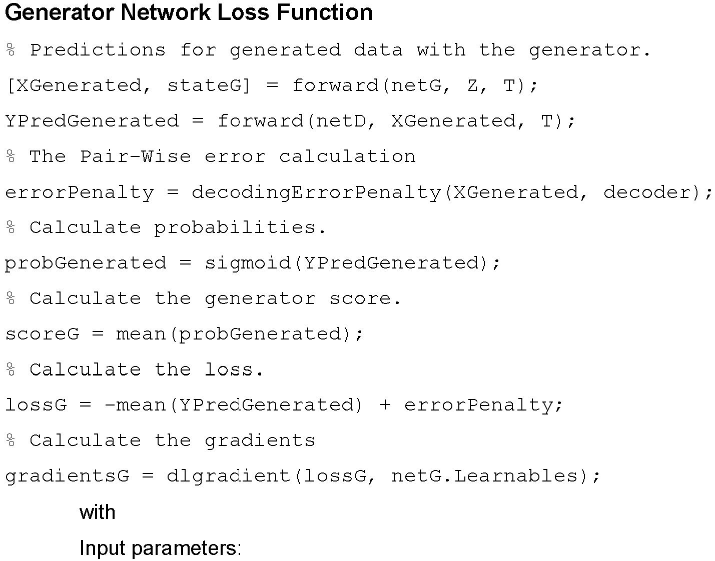

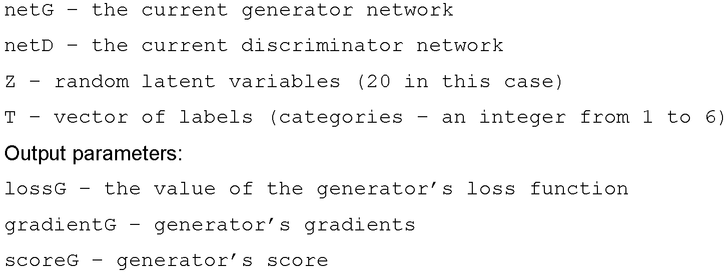

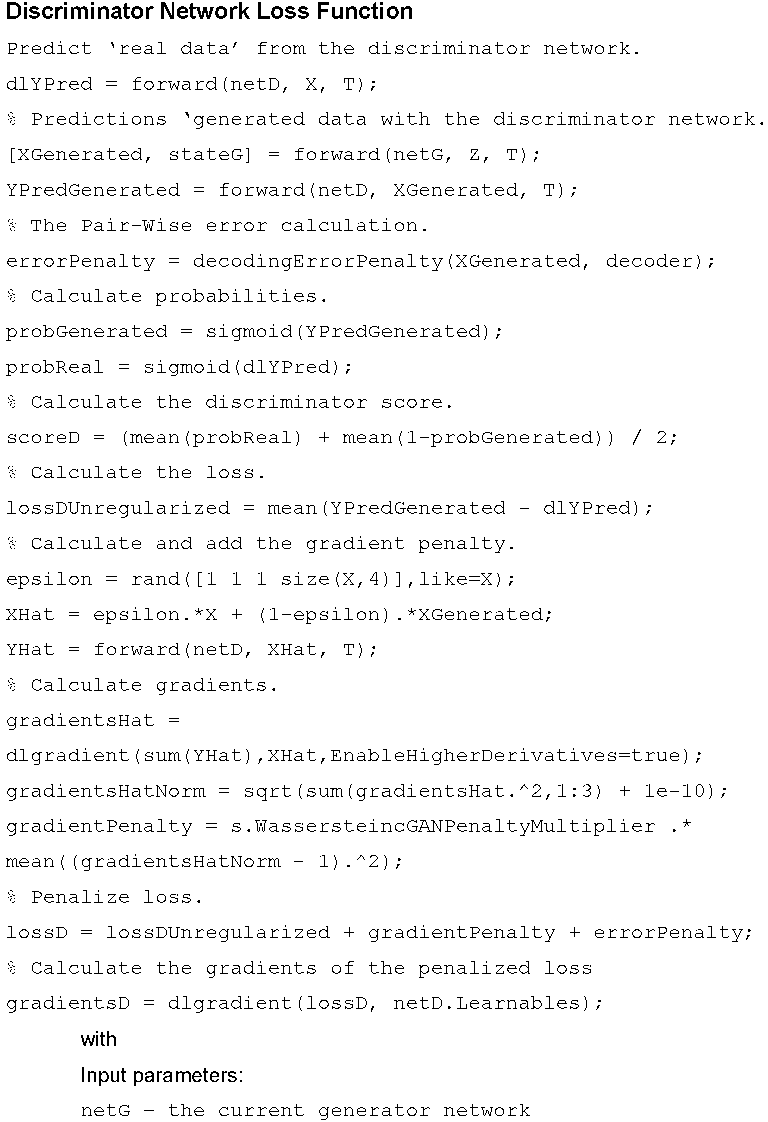

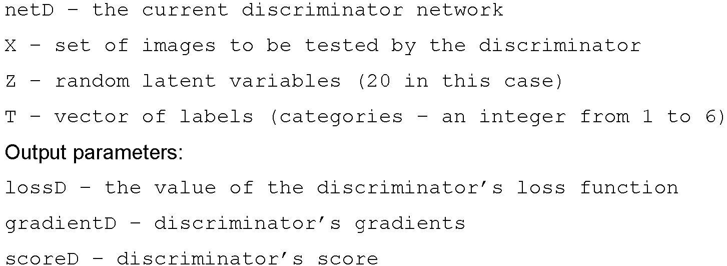

Following training, the procedure ends at 607 and the model is ready to be used for producing new output data.

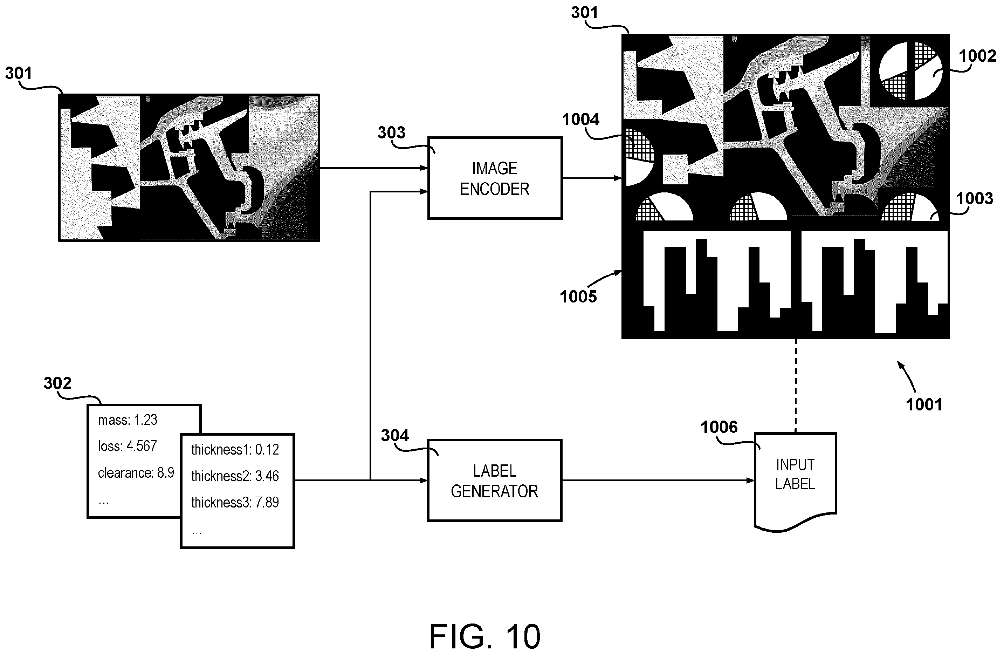

Step 603 is shown in more detail in Figure 7. At step 701, a physical parameter value is picked from numerical data 302. This is then converted to a graphical encoding at step 702. In an embodiment, the graphical encoding is a bar or a glyph, but may be any other form of graphical encoding to represent the physical parameter value. In the present embodiment they are then embedded in duplicate via the loop formed by step 703 (embedding the encoding) and step 704 (checking that all replicates have been added). In other embodiments, even higher numbers of replicates may be embedded. It has been found that adding one or more additional graphical encodings of the same physical parameter value improves model performance. Referring briefly to Figure 10, physical parameter values associated with an image of a component may be added to the image by the image encoder 303 multiple times, using both bars and glyphs. In the present example, the glyphs are semicircles with a shaded portion representing the quantity of the physical parameter value.

Referring again to Figure 7, at step 705 one or more calibration graphics are embedded the image. It has been found that adding calibration graphics of the same type as the other graphical encodings improves training accuracy. For example, a calibration graphic may comprise a full-scale bar. Output images may be checked to ensure this calibration graphic is as expected, hence full-scale in this example. Alternatively, the length or size of the calibration graphic may be used to scale the other graphical encoding embedded in the output images. In an embodiment the location of the calibration graphics may change from image to image to avoid the model simply recognising repeating shapes, rather than matching graphical encodings image-to-image. At step 706 a question is asked as to whether another parameter value needs to be embedded. If so, control returns to step 701. If not, control proceeds to step 707 where the image is stored back to the image data 301 ready for use by the generator network 305 and discriminator network 306.

As will be understood from the pseudocode set out above above and the network structures of Figures 4 and 5, the training of the cGAN system 102 requires a vector of labels attached to each image. In the present implementation, the labels assigned to the images are based the properties of the component in respect of a plurality of objective functions, rather than a single objective function. In the present implementation, said objective functions are the physical output parameter values defining component performance attributes. It has been observed that the objective and constraint spaces can be complex and highly intertwined with infeasible solutions. There is no clear boundary that separates feasible from unfeasible designs, which would represent a challenge to a conventional optimizer.

Figure 8 illustrates a number of component designs and their performance in relation to two objective functions. The Pareto front 801 is shown in the chart, and comprises the optimal components designs in respect of the combination of objective function 1 and objective function 2. A Pareto front rank may be assigned to each component design in the set, based on its dominancy. A design, for example design 802, is non-dominated if it is better than all other designs for at least one of the objective functions - represented by an empty rectangle 803. This is in contrast with a dominated design such as design 804, in which a similar rectangle 805 contains other designs.

The label generator 304 is therefore configured to determining whether the image represents a feasible design or an infeasible design, and then categorise the images representing feasible designs into a plurality of feasible categories using a Pareto front ranking process. To do this, all infeasible designs are assigned a very high rank number, for example 99999, and are then removed from the population. By definition all designs that have rank of 1 are part of the Pareto front and so all non-dominated designs are then assigned a rank of 1 and deleted from the set. The non-dominated individuals within the remaining designs are assigned a rank of 2. The process iterates until all individuals in the set are assigned a rank.

Following Pareto front ranking, the images of feasible designs are assigned to one of a plurality of feasible categories, and the images of infeasible designs are assigned to a final, infeasible category. In an embodiment, the categories are the class intervals of the Pareto front ranks of the images of feasible designs. In a specific embodiment, each feasible category contains an equal number of designs.

The categories are then used as the labels in the training process for the cGAN system 102. In this way, the cGAN system 102 is trained trained to discriminate between feasible and non-feasible designs. In this embodiment, it is also trained to discriminate between designs with low and high Pareto front ranking.

In the present embodiment, the Pareto front ranking itself is not present in any way in images or labels supplied to the generator network 305 and discriminator network 306. This demonstrates the associative ability of the cGAN system 102 to link labelling information to the training data.

In another embodiment, the categorisation of the images may be extended by augmenting the definition of each feasible category with an associated set of rules that determine whether an image is categorised to it. At least one of the feasible categories should be defined by a rule that specifies a Pareto front rank in a particular range, and infeasible designs should continue to be assigned to their own category. However the other categories may target other specific input parameter values or output parameter values. In an embodiment, the rules may be defined in such a way that the categories are inclusive of images that satisfy rules for other categories, such that within the training process an image may be presented twice. Rules may also be defined in such a way that the categories are exclusive of images that satisfy other categories.

### Example 1

A seal assembly for the secondary air system of an aero gas turbine engine is shown in various views in Figures 8A through 8D. Figure 8B is an enlargement of the boxed area of Figure 8A; similarly Figure 8D is an enlargement of the boxed area of Figure 8C.

The quality of the seal 901 has a direct impact on specific fuel consumption. Maintaining the relative gap between a static and rotating interface as constant as possible throughout an engine flight cycle is a highly coupled multi-disciplinary problem, as relative movements are affected by the thermal physics, the air system behaviour, the effect of flight loads and their interactions.

The seal assembly 901 is constituted by a double-sided labyrinth seal: a system of two seals, an outer seal 902 and with a rotor diameter smaller than the static structure diameter, and an inner seal 903 with a rotor diameter larger than the static structure diameter.

The geometry of the assembly was parametrised, with Figures 8A and 8B showing the variable geometric parameters. The parameters are set out in Table 4 below:

**Table 4**

| **Parameter** | **Description** |
|---|---|
| 1 | Seal static thickness |
| 2 | Seal rotor thickness |
| 3 | Arm thickness |
| 4 | Seal 2 rotor thickness |
| 5 | Seal 1 rotor thickness |
| 6 | Diaphragm thickness |
| 7 | Cob width |
| 8 | Categorical variable denoting one of three rotor material options |

Figures 8C and 8D show some of the outputs of interest, which are the mass of the assembly, the seal running clearance low power, the seal running clearance at cruise speed, metal temperature at location R, radial stress at location D, peak hoop stress at location C, metal temperature at location S and the worst principal stress at location F.

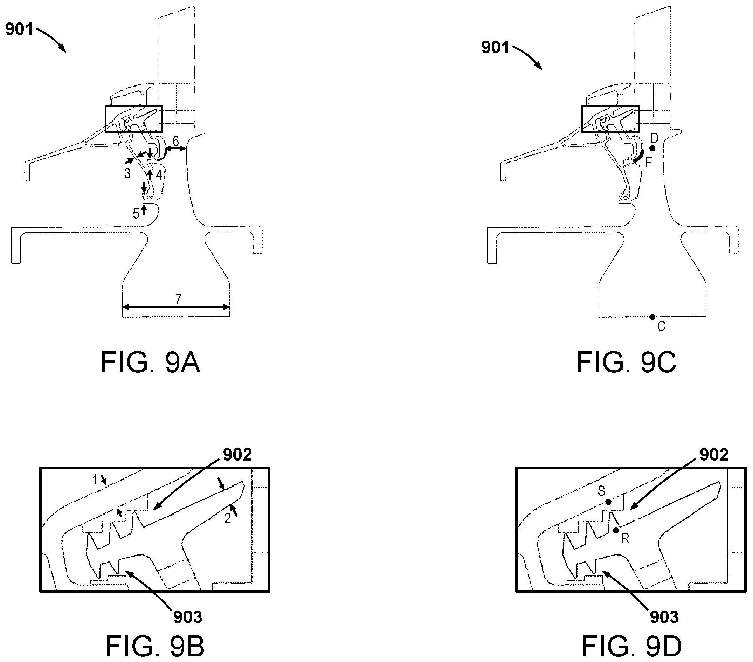

These physical parameter values were embedded in the image data 301 according to the procedure set out in Figure 7 by the image encoder 303, in the form of bars 1001 and glyphs 1002 as shown in Figure 9. In the present example, the graphical encodings are embedded in duplicate, for example glyphs 1003 and 1004 are duplicates of each other. Calibration graphics 1005 are also included, which in the present example are full-scale bars.

Following the Pareto front ranking process, a training dataset of 86431 designs was prepared using a thermo-mechanical simulation. All infeasible designs were assigned a rank of 99999 and removed from the population. After applying the Pareto front ranking to the remaining designs, a vector of ranks was obtained, varying from 1 to 62. All designs were further sorted into five categories (from low rank to high rank) so that each category contained an equal number of designs. The infeasible designs were placed in the sixth category. In this way the first category, contained designs that have rank between 1 and 10.

The cGAN system 102 was trained using the categorization based on Pareto front labels. The cGAN system 102 was then exploited by targeting category 1. This category represented designs that have Pareto front rank less thanor equal to 10. Furthermore, it only contains feasible designs hence we would expect the network to generate both feasible and near-optimal designs. To test this, over 5000 images were created by targeting Category 1. Just like the training images, these contained two instances of graphical encodings for each variable, which should be identical. However, due to inaccuracies, mainly induced by the resolution of the training and generated images, some differences between the two sets are to be expected. 500 images with the smallest pairwise difference were selected and the values of the eight input variables were extracted from the associated graphical encodings.

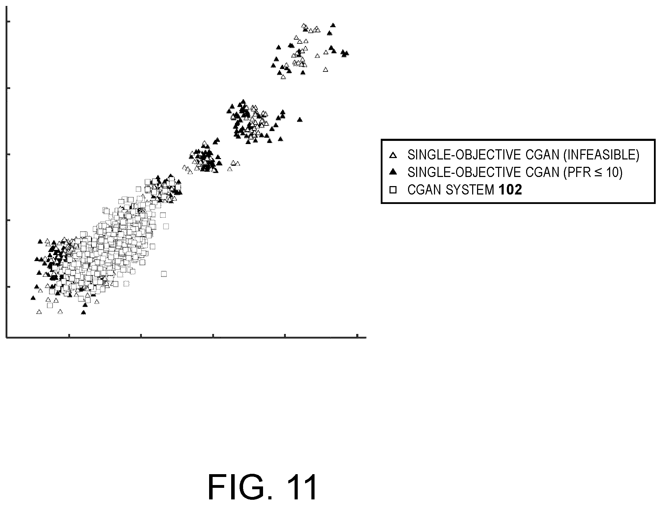

A single-objective cGAN system was trained only on the assemblies' mass values. Figure 11 is a chart showing a comparison between the results. The x-axis shows the cGAN systems' mass prediction, and the y-axis shows the prediction from the thermo-mechanical simulation used to prepare the training dataset. Square points are the results from the cGAN system 102, which were confirmed to all be feasible and have a Pareto front rank of 10 or less. Triangular points are from the single-objective cGAN system only trained on mass values, with empty triangles (9.3062% of results) being infeasible and filled triangles (16.7445% of results) having a Pareto front rank of 10 or less

### Example 2

A set of rules were defined to form the basis of the category definitions to be assigned by the label generator 304, as set out in Table 5 below:

**Table 5**

| **Name** | **Rule** |
|---|---|
| mass | Mass of assembly ≤ 160 & Feasible |
| seal4 | Seal running clearance at cruise < 0.2245 and Feasible |
| seal3 | Seal running clearance at idle < 0.2245 and Feasible |
| pfrank | Pareto front rank ≤18 (all feasible by definition) |

Categories were then defined as set out in Table 6 below:

**Table 6**

| **Category** | **Rule** |
|---|---|
| 1 | All designs satisfying rule 'mass' (exclusive) |
| 2 | All designs satisfying rule 'seal4' (inclusive of 'mass') |
| 3 | All designs satisfying rule 'seal3' (inclusive of 'mass') |
| 4 | All designs satisfying rule 'pfrank' (exclusive) |
| 5 | All remaining feasible designs (exclusive) |
| 6 | All remaining infeasible designs (exclusive) |

As described previously, categories which use rules exclusively contain only those images that satisfy this rule and exclude images that satisfy the rest of the rules. For instance, Category 4 contains only the designs that have PFrank <= 18 but exclude the images from rules 'mass', 'seal4' and 'seal3'. Category 2 is inclusive and includes images from 'seal4' but does not exclude images that also satisfy the 'mass' rule. This means that in essence within the same epoch, an image will be presented twice - once labelled as category 1 and second time as category 2.

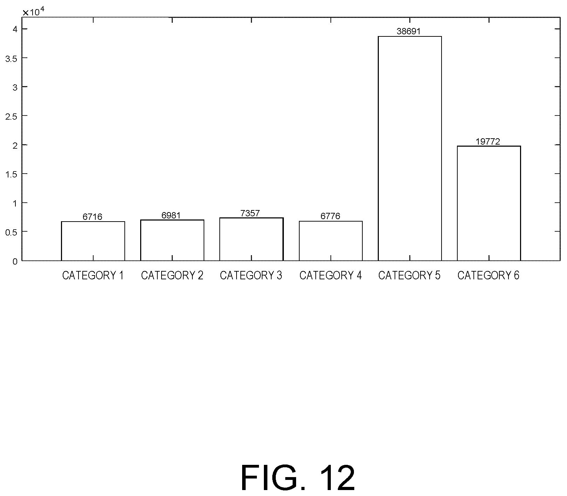

The resultant distribution of images across the six categories is illustrated in Figure 12. The cGAN system 102 was then trained which produced a network that can discriminate and generate within a variety of categories. The cGAN system 102 was then tested using the same procedure as Example 1.

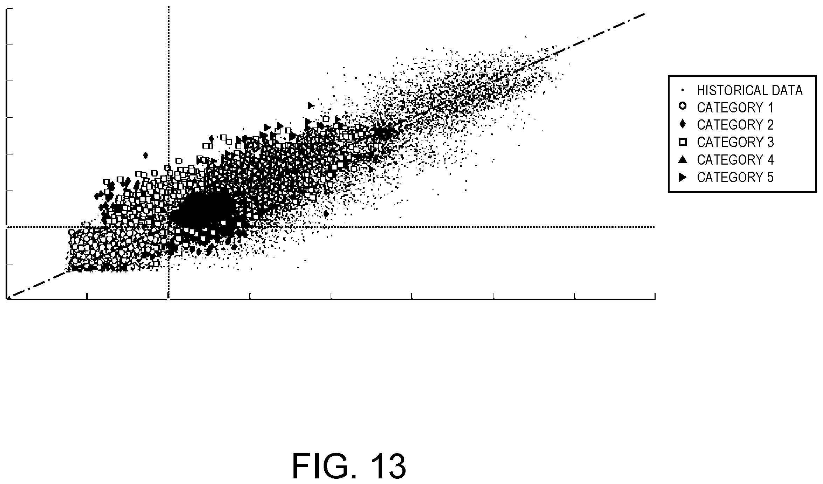

Figure 13 is a chart comparing the output of the cGAN system 102 and the single-objective CGAN system (x-axis) with the thermo-mechanical simulation (y-axis). When Category 1 was targeted, 99.45% of the images generated by the cGAN system 102 were feasible and 99.2% were within the target values of mass ≤ 160 (dotted lines). The very few designs that were not feasible or on target are attributed to lower image resolution and therefore some uncertainty in the image decoding.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A method comprising training a conditional Generative Adversarial Network (cGAN), the method comprising:
obtaining a collection of images of components having a plurality of input parameter values defining component design properties and a plurality of output parameter values defining component performance attributes;
for each image, determining whether the image represents a feasible design or an infeasible design,
categorising the images representing feasible designs into a plurality of feasible categories using a Pareto front ranking process, in which each one of the component performance attributes is defines a corresponding objective function;
categorising the images representing infeasible designs into an infeasible category;
training the cGAN using the images and their categorisation.

2. The method of claim 1, in which the Pareto front ranking process comprises iteratively determining which images are non-dominated for at least one of the objective functions.

3. The method of claim 1 or claim 2, in which the feasible categories are class intervals of the range of Pareto front ranks evaluated for the images.

4. The method of claim 3, in which the feasible categories contain an equal number of images.

5. The method of claim 1 or claim 2, in which each feasible category has an associated set of rules that determine whether an image is categorised to it, and wherein, for at least one of the feasible categories, the associated set of rules includes images having a Pareto front rank in a particular range.

6. The method of claim 5, in which the associated set of rules of one or more feasible categories comprises criteria relating to one or more of:
input parameter values;
output parameter values.

7. The method of any preceding claim, in which the Pareto front rank of an image is only encoded in terms of the category of the image and is not present in the input parameter values or the output parameter values.

8. The method of any preceding claim, in which one or more of a plurality of input parameter values are embedded in the images as graphical encodings.

9. The method of any preceding claim, in which one or more of a plurality of output parameter values are embedded in the images as graphical encodings.

10. The method of any preceding claim, further comprising, for each one of the collection of images of components, embedding one or more calibration graphics into the image to calibrate the plurality of graphical encodings against.

11. The method of claim 10, in which a position of one or more calibration graphics is varied between each image.

12. The method of any one of claims 8 to 10, in which the graphical encodings are one or more of:
bars,
glyphs.

13. The method of any preceding claim, in which images in the collection of images of components are one of:
photographs;
optical three-dimensional scans;
X-ray images;
computationally-generated images.

14. Instructions executable by a computer that, when executed by the computer, cause the computer to perform the method of any preceding claim.

15. A computer-readable medium comprising the instructions of claim 14.
